# EUROPÄISCHE PATENTSCHRIFT

(11) **EP 0 337 218 B1**
(45) Veröffentlichungstag und Bekanntmachung des Hinweises auf die Patenterteilung: **25.01.1995**
(21) Anmeldenummer: 89105744.0
(22) Anmeldetag: 01.04.1989
(51) Int. Cl.: B01D 25/26, B30B 9/26

(54) **Verfahren und Einrichtung zum Entwässern von Schlamm**
Process and dewatering device of mud
Procédé et dispositif de déshydratation de la boue

(30) Priorität: 14.04.1988 CH 1353/88; 22.09.1988 CH 3532/88
(43) Veröffentlichungstag der Anmeldung: 18.10.1989
(73) Patentinhaber: HOPPE + PARTNER, CH-6301 Zug (CH)
(72) Erfinder: Hoppe, Willy, CH-6330 Cham (CH)
(74) Vertreter: Patentanwälte Schaad, Balass, Menzl & Partner AG

(56) Entgegenhaltungen:
- EP-A- 0 100 270
- CH-A- 82 940
- CH-A- 224 721
- DE-C- 930 796

## Beschreibung

Die Erfindung betrifft ein Verfahren zum Entwässern von Schlamm nach dem Oberbegriff von Anspruch 1 sowie eine Einrichtung zur Durchführung dieses Verfahrens.

Verfahren zum Entwässern von Schlamm werden überall dort angewendet, wo als Folge eines industriellen Prozesses, wie z.B. der Reinigung von Zuckerrüben, organische und/oder anorganische Bestandteile in Wasser suspendiert bzw. gelöst als sogenannte Schlammsuppe anfallen und daraus zumindest nicht mehr fliessfähiges, stichfestes Material zurückgewonnen werden soll, um dessen Abtransport zur weiteren Verwertung zu ermöglichen.

Bisher ist es zumindest bei Erdschlämmen, wie sie beispielsweise bei der Reinigung von Zuckerrüben anfallen, üblich, die aus einem Klärbecken gewonnene Schlammsuppe mit einer Trockensubstanz von etwa 20-25 % einem Auflandebecken zu übergeben und in diesem den natürlichen Umgebungsbedingungen solange auszusetzen, bis die benötigte Stichfestigkeit erreicht ist. Da der Schlamm in den Auflandebecken keiner Umwälzung ausgesetzt ist, dauert dieser Vorgang bei grösseren Becken mehrere Jahre, wobei sich der Entwässerungsvorgang mit zunehmender Trockensubstanz immer mehr verlangsamt.

Die Entwässerung im Auflandebecken ist mit dem Nachteil verbunden, dass solche Auflandebecken eine grosse Grundfläche in Anspruch nehmen. Hinzu kommt, dass - falls sich im Schlamm organische Materialien befinden - der eintretende Verrottungsprozess zumindest bei bestimmten Witterungsverhältnissen zu einer unangenehmen Geruchsentwicklung führt.

Neben diesem üblichen Entwässerungsverfahren sind auch schon maschinelle Verfahren bekannt geworden, bei welchen mittels Bandpressen, Zentrifungen und/oder Schneckenpressen gearbeitet wird. Mit diesen maschinellen Verfahren werden, jedenfalls bei Erdschlämmen, Trockensubstanzwerte von maximal 50 % errreicht. Um zu stichfestem Material zu gelangen, muss deshalb der so behandelte Schlamm noch während mehrerer Monate gelagert werden, wozu relativ grosse Flächen benötigt werden.

Dieser Lagerungsvorgang liesse sich dann vermeiden, wenn der Schlamm z.B. einer sogenannten Niedertemperaturtrocknung unterworfen würde. Bei den grossen täglichen Aufgabemengen, wie sie z.B. in der Zuckerindustrie bedingt durch die saisonale Verarbeitung anfallen, würde eine derartige Trocknungsanlage allerdings sehr voluminös und wäre mit ausserordentlich hohen Unterhalts-, Betriebs-, und Energiekosten verbunden.

Aus dem Gebiet der Gewinnung von Ölen oder Säften ist schon ein Press-Verfahren bekannt geworden (DE-C-930.796). Aus Schichten des Pressgutes und Zwischenlagen wird ein Pressgutstapel gebildet, der in einer Presse unter Druck gesetzt wird. Die Zwischenlagen bestehen aus Paketen von gelochten Blechen, die aufeinender liegen und miteinander verbunden sind, sowie die Pakete beidseitig bedeckenden Filterpapierstapeln. In den sich zwischen den Blechen der Pakete bildenden Kapillarspalten kann die unter dem Pressdruck in die Zwischenlagen eindringende Flüssigkeit an den seitlichen Rand des Pressgutstapels abfliessen.

Schliesslich ist aus der EP-A-0.100.270 ein Press-Verfahren bekannt, um aus einer breiartigen Masse, wie aufgeschlossenen Zuckerrüben, die Flüssigkeit -es handelt sich zur Hauptsache um Wasser- austreiben. Analog zu dem bekannten Saftgewinnungs-Verfahren werden aus der Masse Schichten übereinander aufgetragen, wobei zwischen jeweils zwei solche Schichten eine Ableitlage vorgesehen wird. Die aus einem Gewebe aus Kunststoff-Fäden gebildeten Ableitlagen weisen in der Flächenerstreckung derselben eine Flüssigkeitsleitfähigkeit auf. Der aus den Schichten und Ableitlagen gebildete Aufbau wird in einer Presse unter Druck gesetzt und während einer vorbestimmten Zeitdauer unter Druck gehalten. Dabei führen die Ableitlagen die aus den Schichten verdrängte Flüssigkeit seitlich aus dem Aufbau ab.

Beiden Verfahren ist eigen, dass für deren Durchführung, bei welcher jeweils die begrenzte Menge einer Pressen-Charge verarbeitet wird, Betriebsunterbrüche aus dem arbeitsintensiven Erzeugen und Abräumen des ganzen Aufbaus entstehen, die bei der Verarbeitung grosser Mengen nachteilig sind. Hinzu kommt, dass im Rahmen des Pressvoganges dauernd Energie benötigt wird.

Aufgabe der Erfindung ist die Schaffung eines Verfahrens, das aus dem Schlamm in kurzer Zeit und mit geringem Arbeits-und Energieaufwand stichfeste Masse kontinuierlich erzeugen lässt.

Die Lösung der angegebenen Aufgabe gelingt mit den Massnahmen nach dem Kennzeichen von Anspruch 1.

Die erfindungsgemässe Lösung beruht auf der Erkenntnis, dass die Erreichung des stichfesten Zustandes des Schlammes in kurzer Zeit und mit vernachlässigbarem Energieaufwand nur dadurch erreicht werden kann, dass ein physikalischer Zwang zur Freigabe des Wasseranteiles und eine grossflächige Ableitung des freigegebenen Wassers geschaffen werden.

Der aus dem Eigengewicht rührende Druck hält während der ganzen Verweildauer einer Schicht im Aufbau an und zwar, weil diese absinkt und neue Schichten über derselben aufgebaut werden, zwingend mit zunehmendem Wert. Durch das Entfernen von entwässerter Masse am unteren Ende des Aufbaus kann neue Masse dem Entwässerungsvorgang unterzogen werden, ohne diesen zu unterbrechen. Für die Verarbeitungsleistung ist vorteilhaft, dass der bestehende Aufbau weder zur Gänze aufgebaut noch ein neuer Aufbau aus vollständig unbehandelter Masse gebildet werden muss.

Die durch die Gewichtsbelastung (Eigengewicht des Schlammes), insbesondere auch durch den Schichtaufbau entstehende Druckdifferenz zwischen einer Schlammschicht und der bzw. den benachbarten Entwässerungsanlagen zwingt das Wasser, im Sinne einer Verdrängung einerseits und durch eine vom Transmissivitätspaket (Materialpaket) ausgeübte Saugwirkung andererseits in dessen Schichten überzutreten, wo seinem Abfluss wenig Widerstand entgegengesetzt wird. Hierzu weisen die Transmissivitätspakete mindestens eine Entwässerungslage mit ausgesprochener Hohlraumstruktur auf, die auch bei Gewichtsbelastung erhalten bleibt.

Das erfindungsgemässe Verfahren ist nachfolgend anhand einer beispielsweisen Ausführungsform einer ebenfalls erfindungsgemässen Einrichtung erläutert. Vorgängig werden jedoch einige Entwässerungsversuche erläutert, die nach den Grundlagen des erfindungsgemässen Verfahrens durchgeführt werden.

Es zeigen:
- Fig. 1: schematisch den Aufbau der Schichten einer Versuchsanordnung
- Fig. 2: ein Diagramm mit Messergebnissen betreffend Trockensubstanz im Zusammenhang mit Schichtdicke und Menge bei konstanter Fläche,
- Fig. 3: ein Diagramm des Entwässerungsverlaufs in Funktion der Zeit,
- Fig. 4: eine Ausführungsform einer Entwässerungseinrichtung im Längsschnitt,
- Fig. 5: eine Draufsicht auf die Entwässerungseinrichtung in Fig. 4,
- Fig. 6: in gegenüber der Fig. 4 vergrössertem Massstab einen Teil der Entwässerungseinrichtung
Vorerst sei darauf hingewiesen, dass die Figuren 1 - 3 zusammen mit ihren Erläuterungen keine Ausführungsbeispiele darstellen.

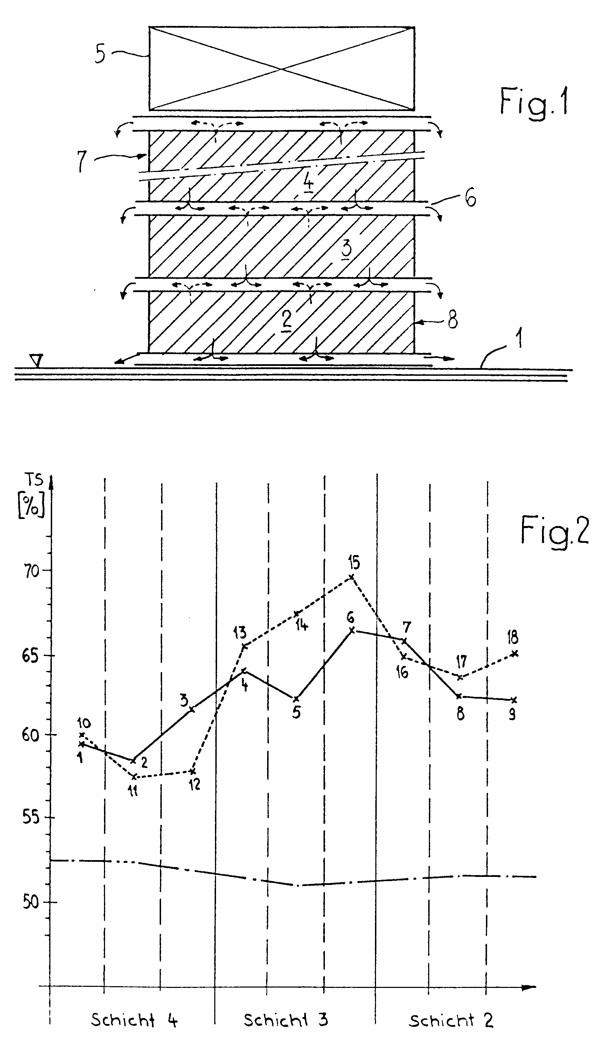

Für einen ersten Versuch wurde in der Verarbeitung von Zuckerrüben angefallener und mittels Zentrifugieren vorentwässerter Erdschlamm mit einem mittleren Trockensubstanszwert von ca. 45% einem Erdschlammbecken mit 4-monatigem Inhalt am Rande entnommen und gemäss Fig. 1 zu einem Schichtgebilde aufgebaut. Das Schichtgebilde hatte einen rechteckigen Grundriss von 4 x 3,5 m. Auf einer ebenen Grundfläche 1 wurden drei Schichten 2, 3, und 4 mit je einer Ausgangsdicke von 30 cm gebildet. Zwischen die Grundfläche 1 und die unterste Schicht 2 sowie zwischen je zwei benachbarten Schichten 2 und 3, bzw. 3 und 4, sowie zwischen die oberste Schicht 4 und ein Gewicht 5 wurde ein Transmissivitätspaket 6 eingebracht, und zwar so, dass dieses auf entgegengesetzten Seiten 7 und 8 über die Begrenzungen der Schlammschichten vorstand.

Die Transmissivitätspakete 6, die unter sich identisch aufgebildet waren, enthielten drei Vlieslagen, bei denen die Vliesfasern aus Kunststoff bestanden. Eine Mittellage bestand dabei aus sogenanntem FLN-SUPERDRAIN (Marke der Fa. Landolt) mit einem Gewicht von 600 gr/m2. Die anderen beiden Lagen - als beidseitige Filterlagen angeordnet - waren aus sogenanntem FLN-Geotextil mit einem Gewicht von 200 gr/m2 gebildet.

Auf den Schlamm wirkte während der Entwässerung neben dem Eigengewicht das Gewicht 5, in Form von mit Sand gefüllten Metallwannen, womit schon auf die oberste Schlammschicht 4 eine mittlere Flächenbelastung von ca. 300 kg/m² erzeugt wurde. In den Schlammschichten wurde demnach ein Verdrängungsdruck aufgebaut, der das in diesem enthaltene Wasser durch die Filterschichten hindurch in die Mittellagen der Entwässerungspakete eintreten liess. Hingegen wurde der Schlamm von den Filterschichten zurückgehalten. Da in den Transmissivitätspaketen und insbesondere in den Mittellagen bei der angegebenen Flächenbelastung zusammenhängende Hohlräume erhalten blieben, konnten diese letzteren das durch die Filterschichten durchtretende Wasser aufnehmen und seitlich abführen. Aus Anwendungen im Tiefbau ist die hohe Wasserdurchlässigkeit in der Verlegungsebene (Transmissivität) von solchen Lagen bekannt.

Nach 6 Tagen wurde das Gewicht 5 entfernt. Der Schlamm in den einzelnen Schichten erwies sich beim Abbau durchwegs als stichfest. Unterschiede in den gemessenen Trockensubstanzwerten sind nachstehend tabellarisch aufgeführt und beziehen sich auf die Messpunkte 1-18 im Diagramm gemäss Fig.2. Von diesen Messpunkten liegen jeweils zwei etwa in gleicher Höhe innerhalb der Schicht, jedoch distanziert voneinander.

| | | | | | |
|---|---|---|---|---|---|
| 1 | 59,3 | 7 | 65,9 | 13 | 66,9 |
| 2 | 58,3 | 8 | 62,4 | 14 | 67,5 |
| 3 | 61,3 | 9 | 62,2 | 15 | 69,7 |
| 4 | 64,0 | 10 | 60,0 | 16 | 65,0 |
| 5 | 62,2 | 11 | 57,5 | 17 | 63,8 |
| 6 | 66,5 | 12 | 57,7 | 18 | 65,4 |

Nach dem Abräumen des Schlammes zeigte sich, dass die Mittellage der Transmissionsschicht vollständig frei von Schlammpartikeln war. Aus den Filterlagen konnten die Schlammpartikel durch Abspritzen mit wenig Aufwand entfernt werden. Die Transmissivitätspakete waren mithin weiter verwenbar.

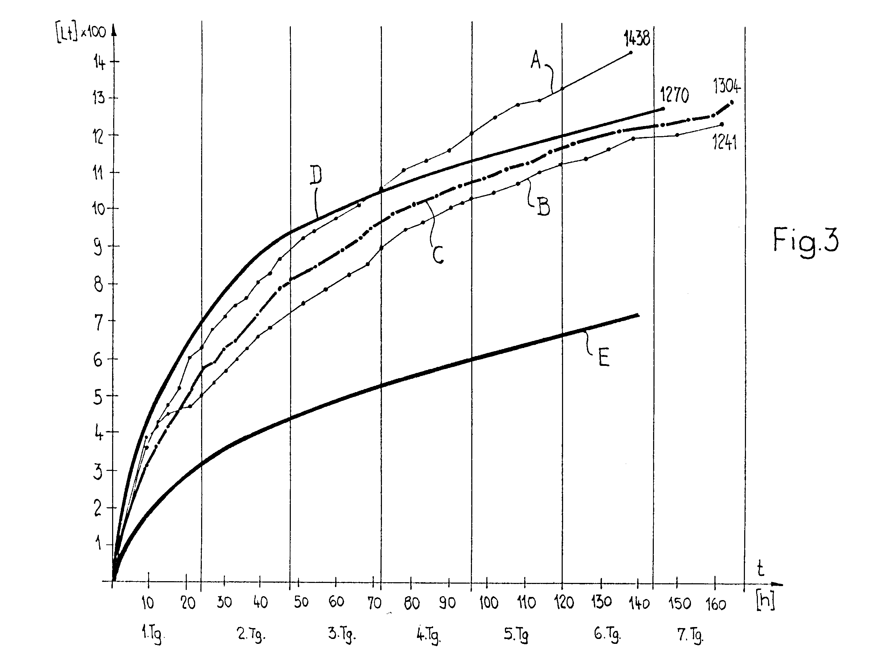

In weiteren Versuchen, deren Resultate in Fig. 3 dargestellt sind, wurden die Schichtdicken und damit auch die Schlammengen verändert, wobei im übrigen analog dem ersten Versuch vorgegangen und gemessen wurde.

Fig. 3 zeigt die Menge ausgetretenen Wassers in Liter in Abhängigkeit von der Zeit t bei wie nachstehend angegebenen, verschiedenen Schlammengen und Schichtdicken:

| Kurve | Schlammmenge | Schichtdicke |
|---|---|---|
| A | 12,6 m³ | 30 cm |
| B | 9,45 m³ | 45 cm |
| C | 8,4 m³ | 30 cm |
| D | 8,4 m³ | 15 cm |
| E | 6,3 m³ | 30 cm |

Aus dem Diagramm gemäss Fig. 3 ergibt sich unter anderem, dass bei Erhöhung des Gewichtes 5 und Verkleinerung der Schichtdicke (z.B. auf 15 cm ) die Abtrocknungszeit wesentlich verkürzt werden kann, z.B. auf 72 Stunden.

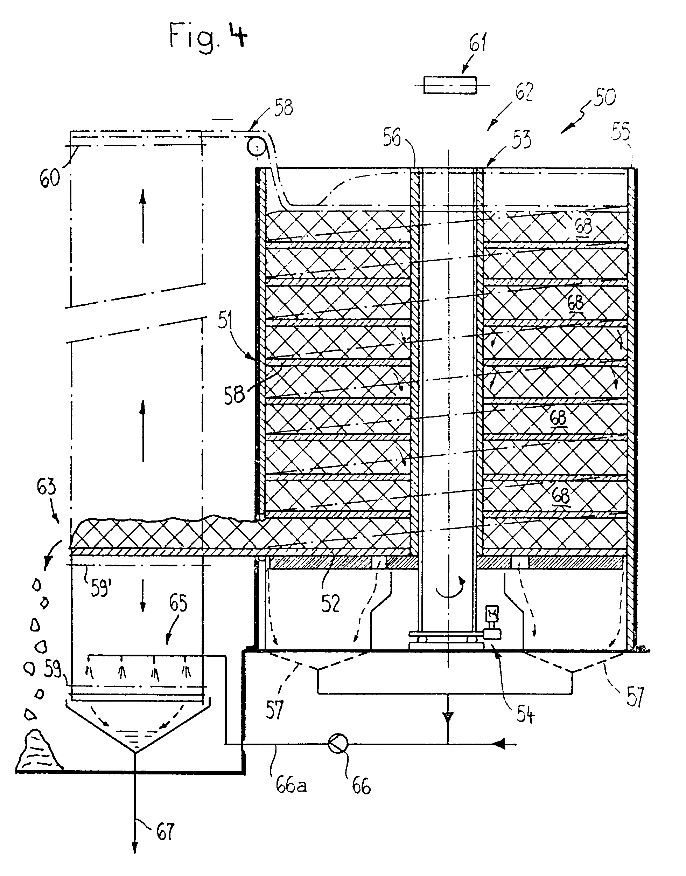

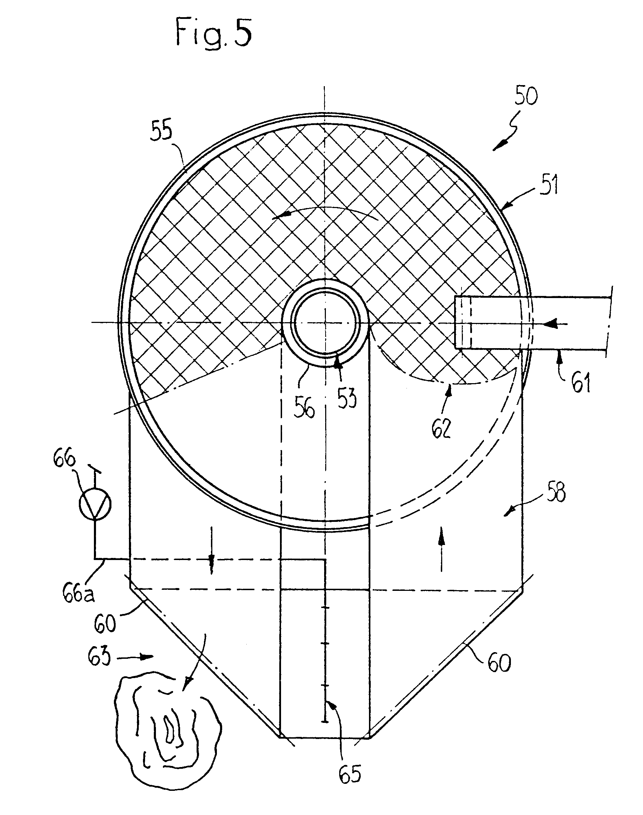

In den Fig. 4, 5 und 6 ist eine Ausführungsform einer Entwässerungsvorrichtung gezeigt, welche eine kontinuierliche Betriebsweise bzw. die Durchführung des erfindungsgemässen Verfahrens erlaubt.

Die Entwässerungs einrichtung 50 weist einen feststehenden Turm 51 auf, dessen Boden 52 mit einer koaxial angeordneten Welle 53 drehfest verbunden ist. Zum Drehen dieser Welle 53 ist eine Antriebsvorrichtung 54 vorgesehen. Der Boden 52 ist auf nicht dargestellte Weise heb- und senkbar. Der Turm 51 ist mit einer Innenauskleidung 55 versehen, während die Welle 53 eine Aussenverkleidung 56 trägt. Die Innenauskleidung 55 und die Aussenverkleidung 56 werden durch eine wenigstens zweilagiges Transmissivitätspaket gebildet, welches aus einer Entwässerungslage und einer mit dieser verbundenen Filterlage besteht, welche dem Innern des Turmes 51 zugekehrt ist. Unten im Turm ist eine ringförmige Wasserauffangwanne 57 vorgesehen.

Im weiteren ist ein als endloses Band ausgebildetes dreilagiges Transmissivitätspaket 58 vorhanden, das im Innern des Turmes 51 in der Art einer Wendelfläche geführt ist und ausserhalb des Turmes 51 über Umlenkrollen 59', 59 und 60 verläuft. Das Transmissivitätspaket 58 besteht aus einer mittleren Entwässerungslage, die beidseitig durch Filterlagen abgedeckt ist.

Ein oberhalb des Turmes 51 verlaufendes Förderband 61 führt den zu entwässernden Schlamm zu einer Schlammaufgabestelle 62. Mit 63 ist eine ausserhalb des Turmes 51 liegende Abgabestelle für das getrocknete Gut (Erde) bezeichnet.

Zur Reinigung des vom getrockneten Gut entladenen Transmissivitätspaketes 58 ist eine Waschanlage 65 vorhanden, welche über eine Leitung 66a mit einer Pumpe 66 verbunden ist, welche Wasser aus der Auffangwanne 57 und gegebenenfalls noch aus einem weiteren Reservoir zur Waschanlage 65 fördert. Die aus dem Transmissivitätspaket 58 herausgewaschenen Rückstände werden über eine Leitung 67 zu einer Deponie geleitet.

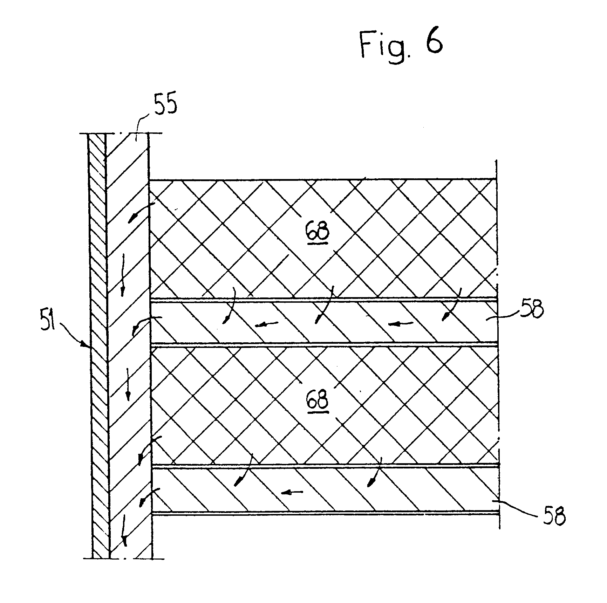

Zu Beginn der Beschickung des Turmes 51 befindet sich die Bodenplatte 52 in ihrer obersten Stellung, aus der sie im Verlaufe des Füllvorgangs langsam nach unten bewegt wird. Der vom Förderband 61 zugeführte Schlamm wird auf das Transmissivitätspaket 58 aufgebracht, wobei auf diesem eine kontinuierliche Schicht gebildet wird. Während des Beschickens wird die Welle 53 und mit ihr die Bodenplatte 52 gedreht. Der aufgegebene Schlamm kommt als Schlammlagen 68 zwischen die Windungen des in der Art einer Wendelfläche geführten Transmissivitätspaketes zu liegen. Durch die Drehzahl der Welle 53 wird die Durchlaufgeschwindigkeit des Schlammes durch den Turm 51 bestimmt. Die obersten Schlammlagen 68 dienen dabei als Gewichtsbelastung für die darunterliegenden Schlammlagen 68. Allenfalls kann zur Erhöhung dieser Belastung noch ein zusätzliches Gewicht vorgesehen werden. Durch diese Gewichtsbelastung wird das Wasser zum Austritt aus den Schlammlagen 68 gezwungen. Das ausgetretene Wasser gelangt in die Entwässerungsanlagen des Transmissivitätspaketes 58 und der Innenauskleidung 55 sowie der Aussenverkleidung 56, wie das in Fig. 6 schematisch dargestellt ist. Das ausgetretene Wasser wird in der Auffangwanne 57 aufgefangen.

An der ausserhalb des Turmes 51 liegende Abgabestelle 63 wird das nun abgetrocknete Gut 64 vom Transmissivitätspaket 58 getrennt, das anschliessend durch die Waschanlage 65 gereinigt und zur Schlammaufgabestelle 62 zurückgeführt wird. Für die Vorwärtsbewegung des Transmissivitätspaketes 58 ist wenigstens ein Teil der Umlenkwalzen 59, 60 angetrieben.

Das erfindungsgemässe Verfahren und die beschriebene Einrichtung zur Durchführung dieses Verfahrens dienen zum Entwässern von Schlamm mit einer Trockensubstanz von etwa 20 % und mehr. Dies bedeutet, dass bei Schlämmen, die mit einem geringeren Feststoffanteil anfallen, zuerst eine Voreindickung zu erfolgen hat, bevor sie auf die erfindungsgemässe Weise entwässert werden. Dies trifft auch bei der Reinigung von Zuckerrüben anfallenden Schlämmen zu, deren Feststoff erheblich geringer ist als 20 %.

## Patentansprüche

1. Verfahren zum Entwässern von Schlamm, bei dem Schichten des zu entwässernden Schlammes übereinander zu einem Schichtgebilde aufgebaut werden, jede der Schichten auf einer in ihrer Flächenerstreckung flüssigkeitsleitfähigen, flexiblen Ableitlage aufgetragen wird, die aus Fasermaterial besteht und Hohlraumstruktur aufweist, die auch bei Gewichtsbelastung aufrechterhalten bleibt, und das Schichtgebilde einem Druck ausgesetzt wird, um über die Ableitlagen aus den Schichten verdrängtes Wasser seitlich aus diesen abzuführen, dadurch gekennzeichnet, dass das Abführen des Wassers in einer Entwässerungslage eines mehrlagigen Transmissivitätspaketes erfolgt, und dass jeweils am unteren Ende des Schichtgebildes entwässerter Schlamm aus den Schichten abgetragen und nachfolgende Schichten zum Absinken gebracht werden, und dass zur andauernden Verdrängung von Wasser durch Bildung von neuen Schichten am oberen Ende des Schichtgebildes in diesem ein aus dem Eigengewicht rührender Druck aufrechterhalten wird.

2. Verfahren nach Anspruch 1, dadurch gekennzeichnet, dass der Schlamm als kontinuierliche Schicht auf ein bahnförmiges, wendelflächenartig geführtes Transmissivitätspaket aufgebracht wird.

3. Verfahren nach Anspruch 1 oder 2, dadurch gekennzeichnet, dass das Transmissivitätspaket zusammen mit dem Schlamm von einer Schlammaufgabestelle (62) zu einer Abgabestelle für entwässerten Schlamm geführt wird.

4. Verfahren nach einem der Ansprüche 1-3 dadurch gekennzeichnet, dass der Schlamm jeder Schicht an einer Filterlage des mehrlagigen Transmissivitätspaktes zurückgehalten wird.

5. Einrichtung zur Durchführung des Verfahrens nach Anspruch 1, gekennzeichnet durch einen Entwässerungsturm (51) mit einer koaxial angeordneten, drehbar antreibbaren Welle (53), mit der mitdrehend ein Boden (52) verbunden ist, auf dem ein Abschnitt des bahnförmigen, wenigstens dreilagigen, im Innern des Entwässerungsturmes wendelflächenartig verlaufenden Transmissivitätspaketes (58) aufliegt, das Filterlagen sowie eine zwischen diesen befindliche Entwässerungslage aufweist.

6. Einrichtung nach Anspruch 5, dadurch gekennzeichnet, dass das Transmissivitätspaket (58) als endloses Band ausgebildet und von einer oberen Schlammaufgabestelle (62) zu einer Abgabestelle (63) für das entwässerte Gut bewegbar ist und über Umlenkwalzen (59,59',60) zur Schlammaufgabestelle zurückgeführt wird.

7. Einrichtung nach Anspruch 6, gekennzeichnet durch eine, in Bewegungsrichtung des Transmissivitätspaketes (58) gesehen, der Abgabestelle (63) nachgeschaltete Waschanlage (65) für das Transmissivitätspaket.

8. Einrichtung nach einem der Ansprüche 5-7, dadurch gekennzeichnet, dass die Innenseite des Entwässerungsturmes (51) und vorzugsweise auch die Welle (53) mit einem wenigstens zweilagigen Transmissivitätspaket überdeckt ist.

9. Einrichtung nach einem der Ansprüche 5 - 8, dadurch gekennzeichnet, dass die Lagen des Transmissivitätspaketes aus Faservlies gebildet sind.

10. Einrichtung nach Anspruch 9, dadurch gekennzeichnet, dass die Fasern der Faservliese aus Kunststoff bestehen.

11. Einrichtung nach Anspruch 9 oder 10, dadurch gekennzeichnet, dass die Entwässerungslage und die Filterlagen aus Faservliesen unterschiedlicher Beschaffenheit gebildet sind.

## Claims

1. Process for dewatering mud in which layers of the mud to be dewatered are built up one above the other to form a layered structure, each of the layers is applied to a flexible drainage sheet which can conduct liquid in the plane of its surface, is composed of fibrous material and has a cavity structure which is retained even under weight loading, and the layered structure is exposed to a pressure in order to remove water displaced from the layers via the drainage sheets laterally from these layers, characterized in that the water is removed in a dewatering sheet of a multi-ply transmissivity package and in that at the bottom end of the layered structure in each case dewatered mud is discharged from the layers and subsequent layers are caused to be lowered and in that for sustained displacement of water, by formation of new layers at the top end of the layered structure, a pressure due to its own weight is maintained in this.

2. Process according to Claim 1, characterized in that the mud is applied as a continuous layer to a web-shaped transmissivity package conducted in the manner of a spiral surface.

3. Process according to Claim 1 or 2, characterized in that the transmissivity package is conducted together with the mud from a mud feed position (62) to a discharge position for dewatered mud.

4. Process according to one of Claims 1-3, characterized in that the mud of each layer is retained on a filter sheet of the multi-ply transmissivity package.

5. Device for carrying out the process according to Claim 1, characterized by a dewatering tower (51) having a coaxially arranged, rotatably drivable shaft (53) to which there is connected in a co-rotating manner a base (52) on which there lies a section of the web-shaped, at least three-ply transmissivity package (58) which runs in the manner of a spiral surface in the interior of the dewatering tower and has filter sheets and a dewatering sheet situated between these.

6. Device according to Claim 5, characterized in that the transmissivity package (58) is designed as an endless belt and can be moved from an upper sludge feed position (62) to a discharge position (63) for the dewatered material and is returned via guide rollers (59, 59', 60) to the mud feed position.

7. Device according to Claim 6, characterized by a washing unit (65) for the transmissivity package, which washing unit is arranged downstream of the discharge position (63) seen in the direction of motion of the transmissivity package (58).

8. Device according to one of Claims 5-7, characterized in that the inside of the dewatering tower (51) and preferably also the shaft (53) are covered with an at least two-ply transmissivity package.

9. Device according to one of Claims 5-8, characterized in that the sheets of the transmissivity package are formed from nonwoven fibrous webs.

10. Device according to Claim 9, characterized in that the fibres of the nonwoven fibrous webs are synthetic.

11. Device according to Claim 9 or 10, characterized in that the dewatering sheet and the filter sheets are formed from nonwoven fibrous webs of different properties.

## Revendications

1. Procédé de déshydratation de boue, lors duquel on constitue des couches de la boue à déshydrater les unes au-dessus des autres pour en faire une structure à couches, on applique chacune des couches sur une nappe de déversement souple, perméable aux liquides dans son extension superficielle, qui est composée de matériau fibreux et présente une structure alvéolaire, qui reste maintenue même en cas de sollicitation pondérale, et on soumet la structure à couches à une pression, pour évacuer latéralement hors des couches, à l'aide des nappes de déversement, l'eau refoulée en provenance des couches, caractérisé en ce que l'évacuation de l'eau se fait dans une nappe de déshydratation d'un paquet de transmissibilité multinappe, et que l'on emporte à chaque fois à l'extrémité inférieure de la structure à couches la boue déshydratée en provenance des couches et que l'on fait descendre les couches suivantes, et que, dans l'optique d'un refoulement continu d'eau grâce à la formation de nouvelles couches à l'extrémité supérieure de la structure à couches, l'on maintient dans cette dernière une pression basée sur le poids propre.

2. Procédé selon la revendication 1, caractérisé en ce que la boue est appliquée en tant que couche continue sur un paquet de transmissibilité en forme de glissière, guidé sous forme de surface hélicoïdale.

3. Procédé selon la revendication 1 ou 2, caractérisé en ce que le paquet de transmissibilité est guidé conjointement à la boue d'un point de chargement de la boue (62) à un point de déchargement pour la boue déshydratée.

4. Procédé selon l'une quelconque des revendications 1 - 3, caractérisé en ce que la boue de chaque couche est retenue sur une nappe filtrante du paquet de transmissibilité multinappe.

5. Dispositif pour la mise en oeuvre du procédé selon la revendication 1, caractérisé par une tour de déshydratation (51) ayant un arbre disposé coaxialement, actionnable en rotation (53), avec lequel est relié en rotation conjointe un fond (52), sur lequel repose une section du paquet de transmissibilité (58) sous forme de glissière, ayant au moins trois nappes, se déroulant dans l'intérieur de la tour de déshydratation sous forme de surface hélicoïdale, qui présente des nappes filtrantes ainsi qu'une nappe de déshydratation se trouvant entre ces dernières.

6. Dispositif selon la revendication 5, caractérisé en ce que le paquet de transmissibilité (58) est formé en tant que bande sans fin et peut être déplacé d'un point de chargement de boue supérieur (62) à un point de déchargement (63) pour le produit déshydraté et peut être reconduit par l'intermédiaire de cylindres déflecteurs (59, 59', 60) vers le point de chargement de la boue.

7. Dispositif selon la revendication 6, caractérisé par une installation de lavage (65) pour le paquet de transmissibilité, placée, du point de vue de la direction de déplacement du paquet de transmissibilité (58), après le point de déchargement (63).

8. Dispositif selon l'une quelconque des revendications 5-7, caractérisé en ce que la face intérieure de la tour de déshydratation (51) et de préférence également l'arbre (53) sont recouverts d'un paquet de transmissibilité à au moins deux nappes.

9. Dispositif selon l'une quelconque des revendications 5 - 8, caractérisé en ce que les nappes du paquet de transmissibilité sont constituées de matériau non-tissé.

10. Dispositif selon la revendication 9, caractérisé en ce que les fibres du matériau non-tissé se composent de matière synthétique.

11. Dispositif selon la revendication 9 ou 10, caractérisé en ce que la nappe de déshydratation et les nappes filtrantes sont formées de matériaux non-tissés de constitution différente.
